Europäisches Patentamt

European Patent Office

Office européen des brevets

(11) Publication number: **0 049 986**

**A1**

# (12) EUROPEAN PATENT APPLICATION

(21) Application number: **81304599.4**

(22) Date of filing: **05.10.81**

(51) Int. Cl.³: **H 02 K 7/118**
**H 02 K 11/00**

(30) Priority: **11.10.80 JP 142294/80**
**14.01.81 JP 4078/81**

(43) Date of publication of application:
**21.04.82 Bulletin 82/16**

(84) Designated Contracting States:
**CH DE FR GB LI NL**

(71) Applicant: **SANKYO SEIKI MFG. CO. LTD.**
**5329-banchi, Shimosuwamachi**
**Suwa-gun Nagano-ken(JP)**

(84) Designated Contracting States:
**CH DE FR LI NL**

(71) Applicant: **Watanuki, Takao**
**2-4-21 Miyoshicho**
**Nakanoshi Naganoken(JP)**

(84) Designated Contracting States:
**GB**

(72) Inventor: **Komatsu, Fumito**
**69-1632-12-banchi Nomura Aza Ooaza Hirooka**
**Shiozirishi Naganoken(JP)**

(74) Representative: **Armitage, Ian Michael et al,**
**MEWBURN ELLIS & CO. 2/3 Cursitor Street**
**London EC4A 1BQ(GB)**

(54) **Electric motor.**

(57) A synchronous motor comprising a permanent-magnet rotor (18) and a stator (12) which, at start-up, uses rectifiers (48,52) for supplying the stator coil (10) with rectified current and a commutator (26) comprising a rotary member (22) and fixed elements (28,30,32), the rotary member (22) being axially displaceable (70) under the action of a centrifugal mechanism against a spring to disengage it from the fixed elements (28,30,32) when the rotor approaches synchronous speed and thereby connect the stator coil (10) directly with the AC supply (44).

FIG.1

-1-

## ELECTRIC MOTOR

The present invention relates to synchronous motors, more particularly to those synchronous motors which comprise a permanent-magnet-containing rotor and a stator, which, at start-up, use rectifiers and a commutator comprising sliders and brushes to supply the stator with only the rectified component of the AC power supply, and which are provided with a mechanical conversion device which, when the rotor has reached nearly synchronous speed, switches the AC supply directly to the stator coils.

A device of this kind is given by Gianni A. Dotto et al., "SYNCHRONOUS MOTOR STARTER CIRCUIT EMPLOYING COMMUTATOR AND RECTIFIER DURING STARTING", U.S.P. 3394296, which consists essentially of a permanent-magnet-type inner rotor and an outer stator, which, at start-up, use rectifiers and a commutator comprising sliders and brushes to supply the stator with only the rectified component of the AC power supply, and which, when the rotation of the rotor has reached the synchronous rotation, allows a centrifugal switch provided in the circuit to short the circuit so as to supply the stator directly with the AC power supply.

However, with such a device the slider remains in contact with the brush even after synchronous operation, so that the contact load consumes a considerable amount of energy and the contact attrition results in considerable decrease in durability.

According to the present invention there is provided a synchronous motor, which has a permanent-magnet rotor, a stator, rectifiers for converting the AC power supply into rectified current, and a commutator for switching the direction of current as the rotor rotates during start-up, and means for switching the AC supply directly to the stator when the rotor approaches synchronous speed;

characterized in that the commutator comprises a rotary component which rotates with the rotor and engages fixed elements for effecting switching of the current but is axially displaceable to release it from contact with said elements, and means are provided for effecting said displacement when the rotor approaches synchronous speed, said displacement allowing the AC current to be supplied directly to the stator.

Referring to the drawings:

Figure 1 shows a schematic diagram of one embodiment of the present invention.

Figures 2A, 2B, 2C, 3A, 3B and 3C illustrate the operation of the switching mechanism used in the motor shown in Figure 1.

Figure 4 is a partially cut-away side view of the centrifugal switch shown in Figure 1.

Figure 5 shows another cam mechanism.

Figure 6 shows the arrangement of components for the centrifugal switch.

Figure 7 is a cross-sectional view of an outer-rotor-type single-phase 2-pole synchronous motor with rectifiers built into the sliders.

Figure 8A is a cross-sectional end view of the slider from Figure 7; Figure 8B is a partially cut-away top view of the slider; and Figure 8C is the slider viewed from side.

Figure 9 is a cross-sectional view illustrating the slider which is in the axially displaced state when the rotor has approached synchronous speed.

Figure 10 illustrates the relationship of the brushes when the slider has been axially displaced.

Figure 11 illustrates an alternative embodiment of slider.

The synchronous motors of the present invention are exemplified in the following description with reference to the drawings. Two selected embodiments are given: (1) a motor in which the starting mechanism comprises stationary rectifiers for the starting mechanism located in a circuit and a commutator consisting of a circular cam rotary in union with the rotor shaft, and stationary contact switches; (2) a motor in which the starting mechanism comprises a commutator consisting of stationary brushes and sliders rotary in union with the rotor shaft, and rectifiers located within the sliders and rotating in union with the rotor shaft.

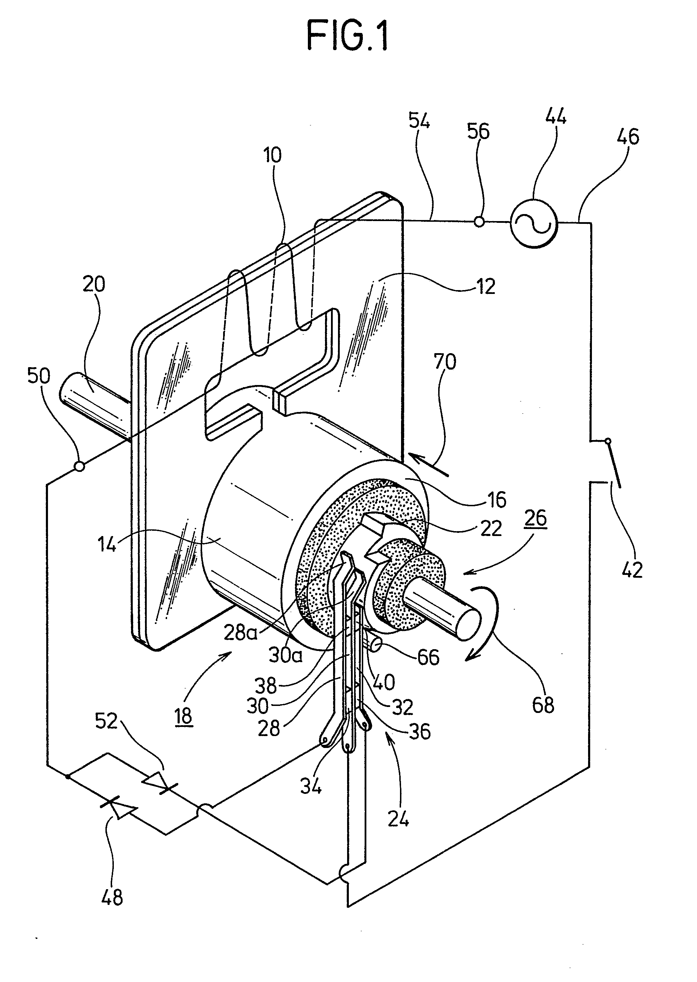

Figure 1 is a schematic diagram illustrating the operating principle of a 2-pole single-phase synchronous motor to which the present invention has been applied. As seen from Figure 1, the motor possesses a 2-pole stator 12 with coil 10; a 2-pole permanent magnet 14 generating the field and carried by the rotor 18 which has a centrifugal switch 16 incorporated inside; a rotor shaft 20 supporting rotor 18 rotatable in a bearing (not shown) between the poles of stator 12; and a commutator 26.

Commutator 26 consists of a cam 22 and external stationary contact switches 24 which contact the cam 22. Contact switch 24 comprises three contact plate springs 28, 30 and 32 electrically separated by insulators 34 and 36, and having contacts 38 and 40 between springs 28 and 30 and springs 30 and 32, respectively. Spring 30 is connected to terminal 46 of the single-phase AC power supply 44 via the power supply switch 42; spring 28 is connected to terminal 50 of coil 10 via diode 48 with the polarity as shown; and spring 32 is connected also to terminal 50 via diode 52 opposite to diode 48 in polarity. The other terminal 54 of coil 10 is connected to the other terminal 56 of AC power supply 44.

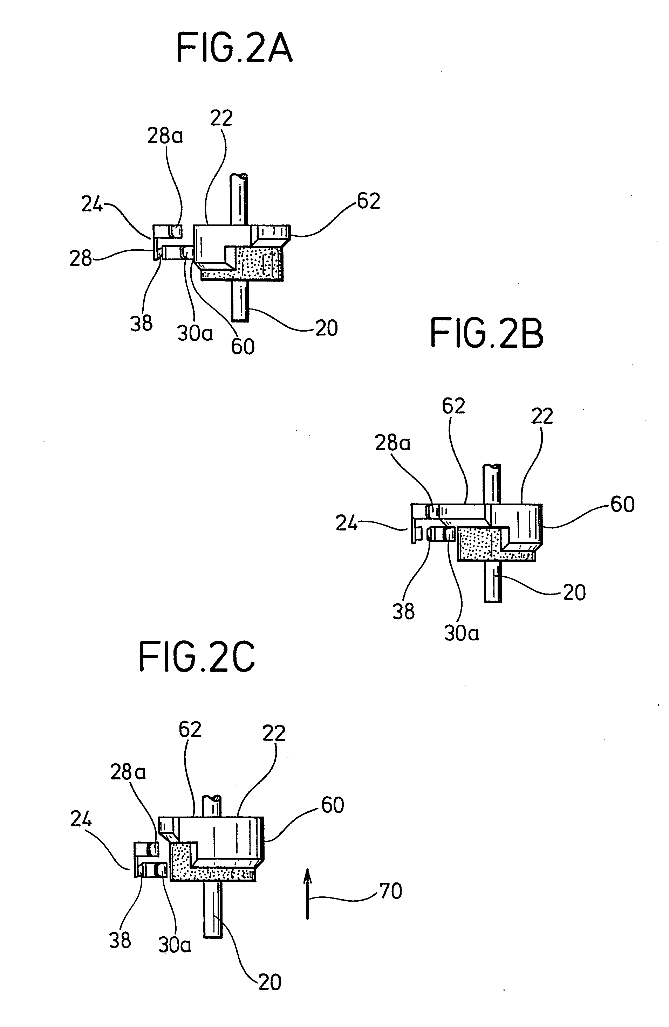

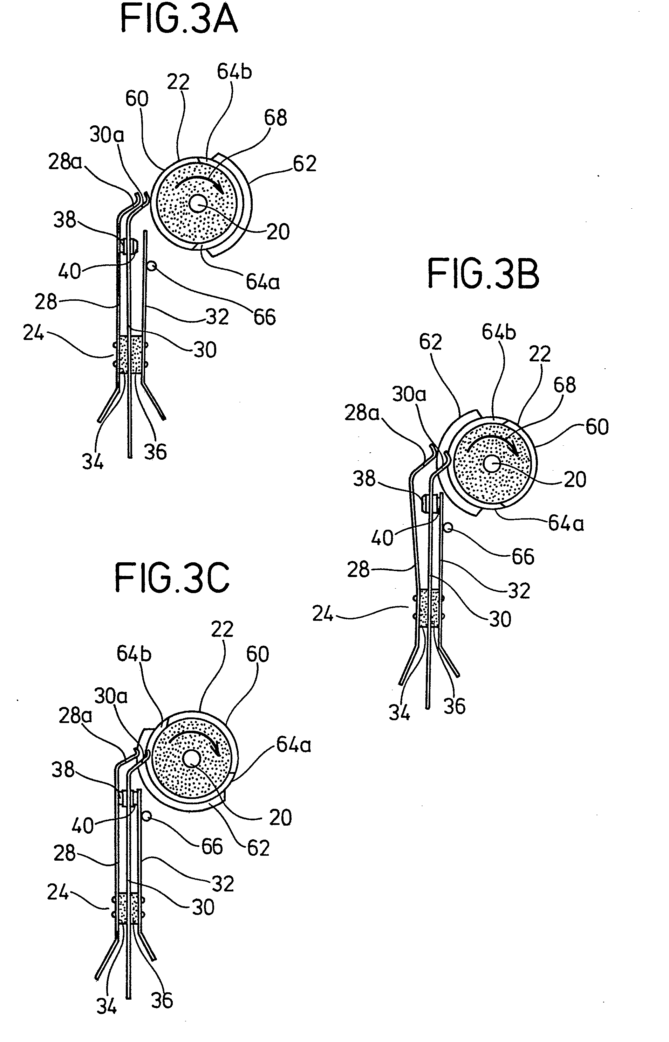

As seen from Figs. 2A, 2B, 3A and 3B, cam 22 has a first elevated part 60 covering a circumferential angle of almost $180^{\circ}$ and a second elevated part 62 covering almost the other 180° angle, the part 62 having twice the elevation of the part 60. The elevated parts are concentric and are located in two adjacent orbitals, the first elevated part 60 extending into both orbitals but the second elevated part 62 being confined on one of the orbitals. The elevated part 62 in its orbital terminates short of the elevated part 60 in the other orbital so that there are non-overlapping regions 64a and 64b on opposite sides of the circumference of the cam.

The contact plate spring 28 has its tip 28a assuming an L-shape as shown in Figure 1 and is designed to be in sliding contact with the elevated part 62 of cam 22 and to be displaced thereby to the left as shown in Figures 2A, 2B, 3A and 3B. Spring 30 also has its tip 30a formed as an L-shape and is designed to be in sliding contact in the adjacent orbital with the elevated part 60 of the cam 22 and to be displaced thereby to the left as shown in Figure 3A and engages spring 28 by contact 38. Each of springs 28, 30 and 32 is biased to the right as shown in Figure 3A and spring 32 is restrained by stop 66. Spring 28 has its base overlapping that of spring 30 but is bent laterally in the region of the tip 28a so as to be located on the orbital of the elevated part 62. Therefore, when cam 22 is positioned as shown in Figures 2A and 3A, contact 38 makes and contact 40 breaks; whereas when cam 22 is positioned as shown in Figures 2B and 3B, contact 38 breaks and contact 40 makes.

The switching operation will be described below. Suppose that switch 42 is closed when rotor 18 is positioned as shown in Figures 1, 2A and 3A. In what follows, this position of rotor 18 will be referred to as the initial position. In this state with closed contact 38, there will be a flow of electricity from terminal 46 of the power supply 44 via switch 42, contact 38, and diode 48 to coil 10. Let this electric current correspond to the positive half-cycle of power supply 44. When the wave form of AC power supply 44 is inverted in the next half-cycle, the current is checked by diode 48 from flowing through coil 10. Thus, while cam 22 is rotating ca. 90° from the position of Figure 3A, only the positive half-wave AC is supplied to coil 10, making rotor 18 begin to rotate in the direction of arrow 68. When rotor 18 has rotated more than 90° from the initial position, contact 38 is opened and contact 40 is closed as shown in Figure 3B, with resulting connection between terminal 46 of power supply 44 and diode 52. Thus, coil 10 is supplied with the negative half-cycle of AC power supply 44, causing rotor 18 to rotate further, with resulting acceleration of the rotation of rotor 18. When rotor 18, after starting and accelerating as described above, has reached a condition where the rotor 18 is synchronous with the wave-form periodicity of the AC power supply, rotor 18 continues to rotate at a frequency of power supply 44.

Gaps 64a and 64b between the elevated parts 60 and 62 of cam 22 are designed in such a way that, when the tip 30a of spring 30 comes on each gap, both the contacts 38 and 40 are made and connect both the diodes 48 and 52 to the AC power supply 44. This is to allow coil 10 to be sufficiently excited even if the rotor 18 has to start at this position. The relative position of rotor 18 and switching mechanism 26 is determined in such a way that, when pole N of rotor 18 faces pole 60 of stator 12, the contact of switch 24 is positioned between the state of Figure 3A and that of Figure 3B, i.e. springs 28a and 30a are positioned on gap 64a.

When the motor reaches the synchronous working state, centrifugal switch 16 is put into operation at a prescribed rotary speed close to the rotary speed for the power supply frequency to shift cam 22 axially in the direction of arrow 70. The centrifugal switch will later be described in detail with respect to its structure and operation. When cam 22 is shifted in the direction of arrow 70, i.e. towards rotor 18 in the axial direction of rotary shaft 20, the sliding engagement between cam 22 and contact switch 24 is lost  and, as seen from Figures 2C and 3C, springs 28, 30 and 32 lie to the right of the figures up to the limit of stop 66 so that both the contacts 38 and 40 are made.  In this state, both the diodes 48 and 52 are connected to terminal 46 of AC power supply 44, causing no switching operation to be effected.  However, since rotor 18 is in synchronous rotation with the frequency of power supply 44, the rotary magnetic field produced by stator 12 keeps rotor 18 in the synchronous working state, i.e. this motor operates completely as an ordinary synchronous motor.

The point at which centrifugal switch 16 comes into operation may be within an interval extending to the synchronous speed for the power supply frequency, provided the synchronous working state can be reached ultimately.

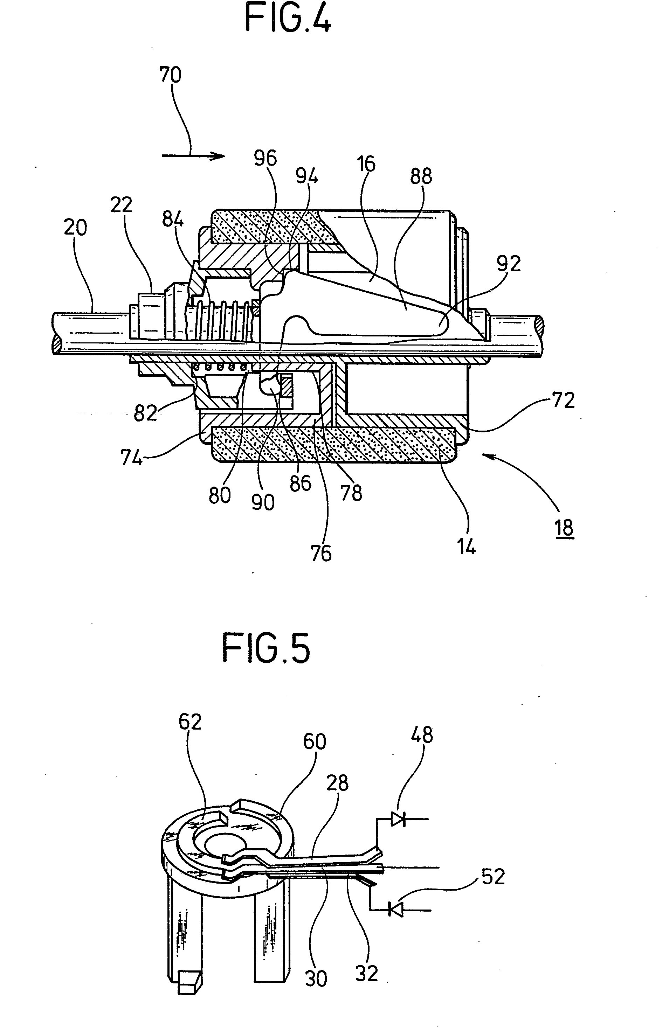

The structure and operation of centrifugal switch 16 will be described in detail with reference to Figure 4.  On the outer circumference of casing 72 fixed to rotor shaft 20 the permanent magnet 14 is inset and secured, forming rotor 18.  Cam 22, rotary in union with rotor shaft 20, is accommodated in a part 74 which is located in and rotary in union with casing 72, so as to be movable in the axial direction of rotor shaft 20.  Part 74 comprises an outer cylinder 76 and an inner cylinder 78.  A coil spring 84 extending axially is inserted between the left end 80 of inner cylinder 78 and shoulder 82 in a cavity of cam 22, so that cam 22 is biased leftward in the figure away from rotor 18.  The bottom 86 of the cavity of cam 22 has the working end 90 of a pair of weights 88 contacting it as shown in the figure.  The weight 88 comprises a weighted portion 92 and a fulcrum 94 which is in contact with projection 96 of part 76.  Thus, when the rotary speed of rotor 18 exceeds the prescribed rotary speed, the
centrifugal force exerting on weighted portion 92 moves
weighted portion 92 radially with respect to rotor shaft
20. This movement results in a force which in turn moves
the working end 90 to the right in the figure about fulcrum
94, pulling cam 22 in the direction of arrow 70 against the
spring 84. On the other hand, when the speed of rotor 18
falls below the prescribed value, spring 84 forces cam 22
to move in the direction opposite to arrow 70. The
prescribed rotary speed is determined by the relative
proportions and weights of the weighted part 92, the
strength of the spring 84, etc.

A 2-pole single-phase synchronous motor has been
described as an embodiment of the present invention. This
technology is also applicable to 2n-pole synchronous
motors where n is an integer equal to or more than 2. In
this case, the mechanism comprises two cam sections; the
first cam section covering a rotary angle of ca. $360^{\circ}/2n$
closes the first contact and opens the second, thereby
connecting the AC power supply to one of first and second
rectifying mechanisms; and the second cam section covering
$360^{\circ}/2n$ opens the first contact and closes the second,
thereby connecting the AC power supply to the other one of
said first and second rectifying mechanisms. Also, in
application to three-phase AC synchronous motors, we have
only to use three stators having their coils disposed with
$120^{\circ}$ phase difference to one another together with three
corresponding contacting mechanisms.

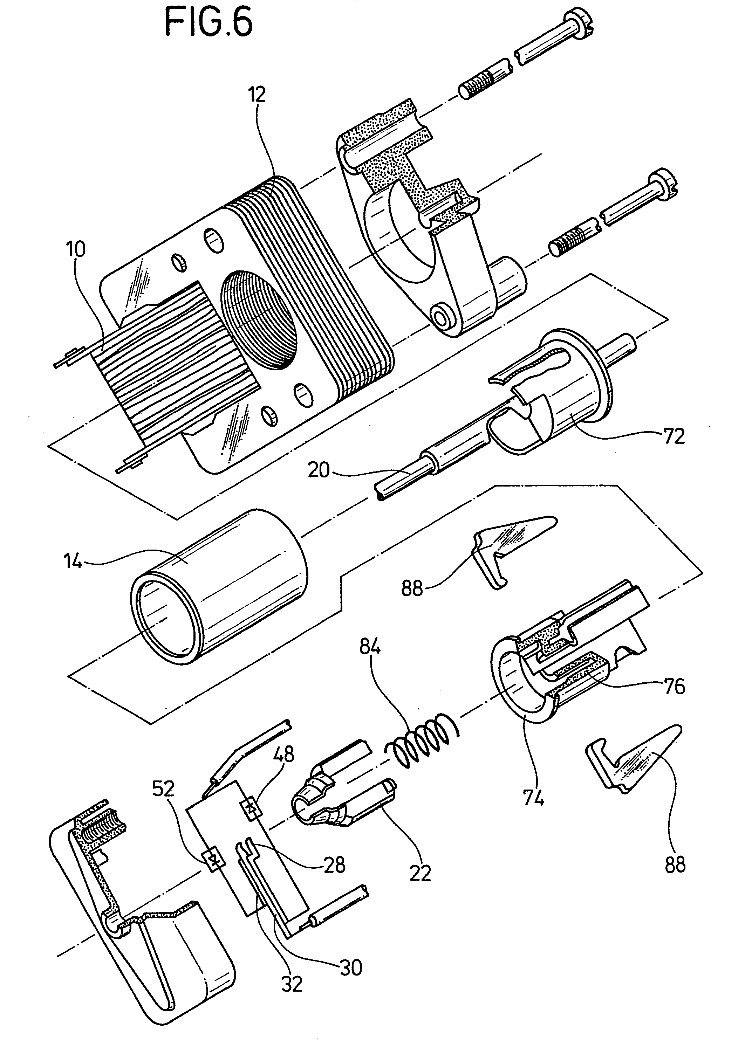

Instead of radially projecting cams, the cam
mechanism may be formed with axial projections as shown in
Fig. 5; or any other cam mechanism may be provided which
is capable of effecting the required operation of the
contacting mechanism on rotation.

Next, the other embodiment will be described.

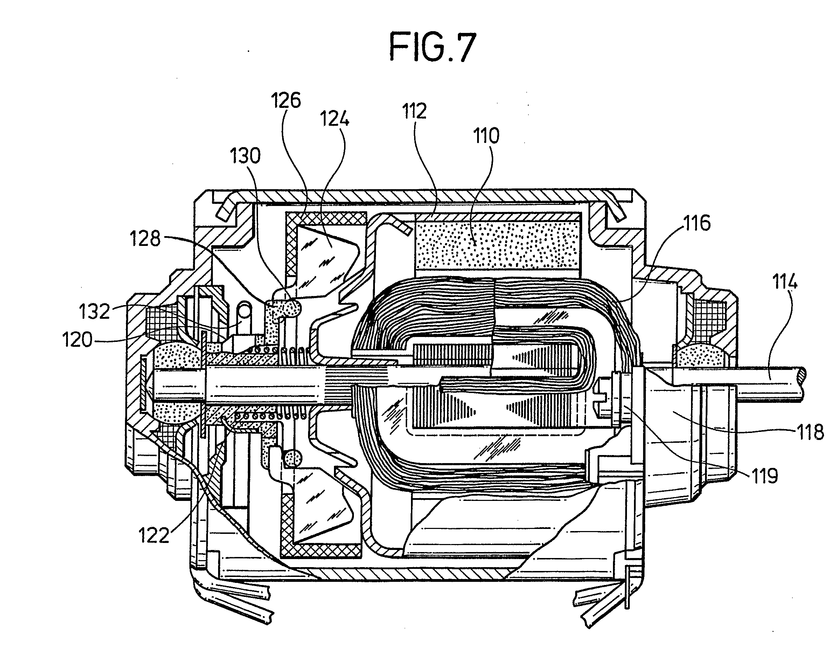

Figure 7 is an exploded cross-sectional view of a 2-pole single-phase synchronous motor. 110 is an annular
2-pole permanent-magnet rotor, which has a cap 112 to
shield the magnetic flux and rotate in union with rotor
shaft 114. A 2-pole stator 116 is fixed to bearing 118 of
rotor shaft 114 with bolts 119 and is located in the space
between the rotor shaft 114 and rotor 110. A slider 120
is divided circumferentially 180° apart, and is capable of
free sliding in the axial direction, and is urged to the
left by spring 122.

Weights 124 are accommodated within a case 126, and
has their inner ends hooked on L-shaped ends 130 of
connecting sections 128 extending from slider 120 toward
case 126, so that the weights can pivot about the ends
130. A brush 132 is in sliding contact with slider 120 at
the time of starting.

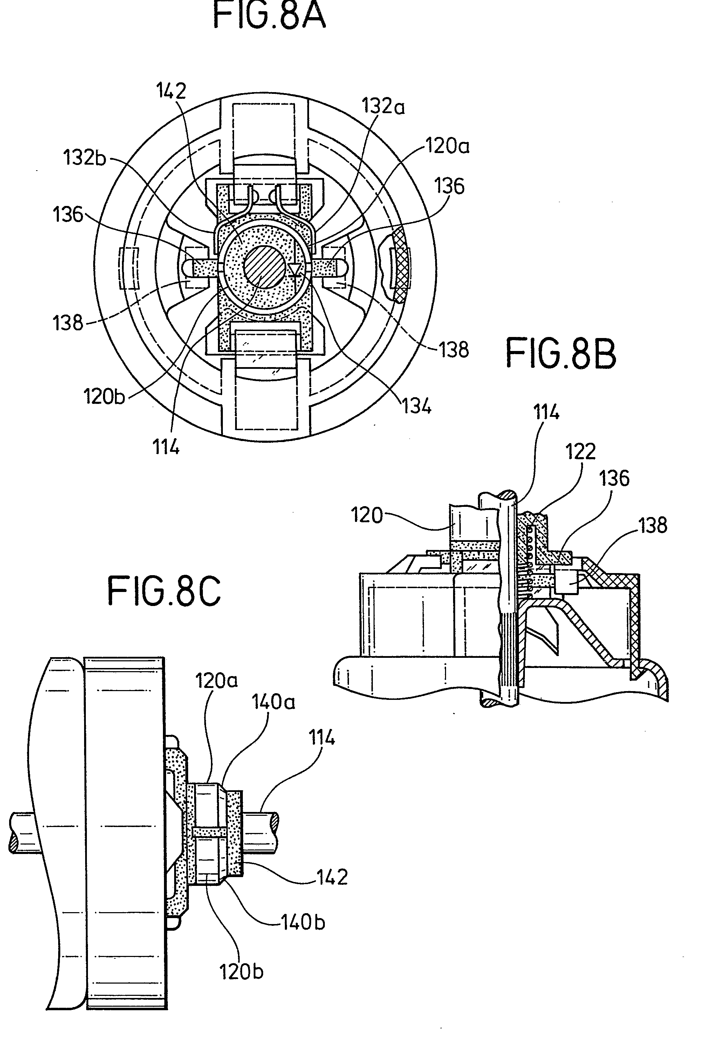

Referring to Figures 8A to 8C, the slider 120
comprises slider pieces 120a and 120b each of which extends
almost 180° about rotor shaft 114. Within slider 120 there
is rectifier 134 which connects slider pieces 120a and 120b
with the conductive direction from slider piece 120a to
120b. Brush 132 consists of brush elements 132a and 132b,
which are in sliding contact with slider pieces 120a and
120b, respectively. Slider guides 136 fit keyway sections
138 so as to allow slider 120 to rotate in union with
rotor shaft 114 but to slide freely in the axial direction.
The slider pieces 120a and 120b have taper sections 140a
and 140b, respectively, leading to step section 142.

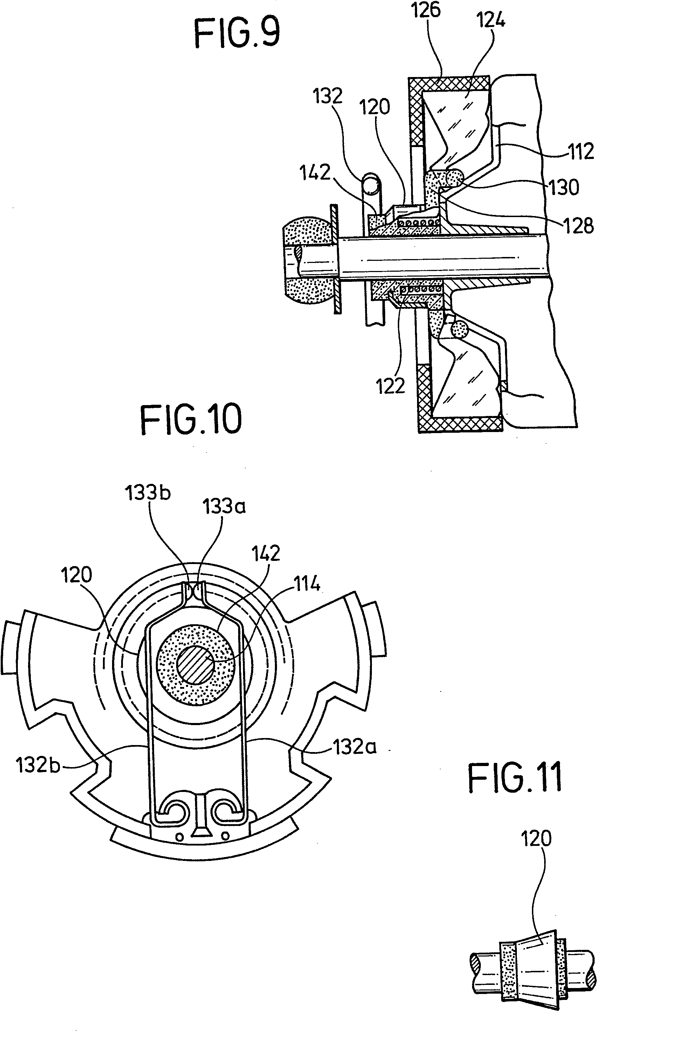

Figure 9 illustrates the state where the rotor 110
has approached the synchronous speed with resultant outward
pivoting of weights 124 by centrifugal force.

The weights 124 are designed to begin to open
outwards at a prescribed rotor speed. Opening of weights
124 will cause the weights 124 to pivot around the L-shaped
ends 130 of connecting sections 128 and at the same time to
move from contacting the radial end wall of case 126 to contacting the circumferential outer wall. This in turn causes slider 120 via connecting section 128 to be pulled toward stator 116 (to the right) against the pressure of spring 122. When slider 120 is displaced axially, brushes 132a and 132b having been in sliding contact with slider pieces 120a and 120b will come opposite the stepped section 142 of slider 120.

Figure 10 shows brush 132 in its conductive state, where slider 120 is pulled in, brushes 132a and 132b are out of contact with slider pieces 120a and 120b, and the upper contact sections 133a and 133b are in contact with each other by reason of the diameter of the stepped section 142 being less than the spacing of the brush elements 132a, 132b.

Below synchronous speed, when brush element 132a is supplied with electricity from a single-phase AC power supply, rectifier 134 allows positive electric current to flow from slider piece 120a to 120b, the rectified current reaching brush 132b is passed through coil 117 of stator 116, and stator 116 is energized so as to accelerate the corresponding permanent-magnet rotor 110.

When rotor 110 rotates through 180°, slider 120 is also caused to rotate 180°, and the direction of current through coil 117 is reversed because now the rectifier 134 is reversed in relation to the brush elements 132a and 132b so that only negative current reaches brush element 132b. Thus, in correspondence with a 180° rotation of the poles of permanent-magnet rotor 110, the poles of stator 116 are also accelerating the rotation of rotor 110.

In the sequence above the rotary speed of rotor 10 is increased until it becomes synchronous with the frequency of the AC power supply, when slider 120 will be displaced axially as described above, causing contacts 133a and 133b of brush elements 132a and 132b to be short-circuited with each other. Thus, there is a direct flow of AC current through coil 17, under which condition the motor works as a synchronous motor.

Figure 11 illustrates an alternative embodiment of slider 120 for brush 132. Slider 120 is tapered, becoming smaller in the disengaging direction. It is desired that the brush (not shown) has the same slope as the tapered section so as to be capable of tight contact with the larger-diameter part of the tapered section.

The foregoing description has referred to single-phase 2-pole embodiments of the present invention. In the case of single-phase multi-pole motors, it may be easily understood that we have only to use a permanent-magnet rotor with 2n poles (n is an integer equal to or more than 2), to use one, less than n, or n stators in correspondence with the number of rotor poles, and to have 2n slider pieces disposed at $2\pi/2n$ intervals around the rotary shaft.

In this case it is necessary, as with the case of the 2-pole motor, that the rectifiers within the sliders are connected so that the slider pieces are conductive in the circumferential direction alternately as in (+), (-), (+), (-), etc., with resulting connection in the order brush 132a → (+) slider piece → (-) slider piece → brush 132b → coil 117.

The embodiments described above relate to single-phase AC power supply. In cases where a three-phase AC power supply is used, we have only to dispose three sets of switching mechanism and stator with 120° phase difference and connect these sets to one another in correspondence with the three-phase AC power supply.

Other displacing mechanisms for the slider are possible. In one example, case 126 has a sirocco fan united with it, and case 126 together with slider 20 is made slidable in the axial direction and pushed opposite to the urging of the fan by spring 122. Rotation of the fan at a speed exceeding a prescribed value produces a negative pressure inside case 126 so as to attract case 126 to the right and displace the slider 120. In another example, a screw fan is provided on the outer side of case 126 and rotation of the screw fan at a speed exceeding a prescribed value causes the fan to advance to the right and displace the slider 120.

With the above structures for the present invention, motors may be produced of smaller size and higher efficiency and since, when the speed of motor has approached synchronous operation, the autostart mechanism is completely released, resulting in elimination of mechanical and electrical resistance on the switching mechanism, no generation of spark due to the brush sliding, no damage to sliding parts, and no noise generation from sliding parts.

The present invention is effective to making the motor smaller and lighter and to lowering the cost, since the permanent-magnet rotor positioned outside surrounds the stator placed inside with reduced magnetic flux leakage and increased magnetic efficiency, and a smaller rotor is required than with a permanent-magnet rotor placed inside.

CLAIMS:

1. A synchronous motor, which has a permanent-magnet rotor (18), a stator (12), rectifiers (48,52) for converting the AC power supply into rectified current, and a commutator (26) for switching the direction of current as the rotor rotates during start-up, and means for switching the AC supply directly to the stator when the rotor approaches synchronous speed; characterized in that the commutator comprises a rotary component (22) which rotates with the rotor and engages fixed elements (28,30, 32) for effecting switching of the current but is axially displaceable (70) to release it from contact with said elements, and means (74-96) are provided for effecting said displacement when the rotor approaches synchronous speed, said displacement allowing the AC current to be supplied directly to the stator.

2. A synchronous motor according to claim 1, wherein the commutator rotary component takes the form of a cam mechanism (22) rotary in union with the rotor, and said switching elements comprise first, second and third springs (28,30,32) resiliently bearing on the cam mechanism, there being first and second contacts (38,40) between the first and second springs and between the second and third springs, respectively, whereby the contacts are made and broken by the action of the cam on the springs, the springs and contacts being arranged to connect the power supply (44) to the stator coils via first and second rectifiers (48,52) arranged in parallel with opposite polarity, said cam mechanism comprises first and second cam sections (60,62), the first (60) of which, covering a rotary angle of ca. $360^{\circ}/2n$ closes the first contact (38) and opens the second (40), thereby connecting said AC power supply to one (48) of said first and second rectifiers, and

the second (62), covering ca. $360°/2n$ sequentially opens the first contact (38) and closes the second (40), thereby connecting said AC power supply to the other (52) one of said first and second rectifiers; and said springs (28,30, 32) while out of control by the cam mechanism, are arranged to have both the first and second contacts (38,40) closed.

3. A synchronous motor according to claim 1, wherein (Figs. 7-10) the commutator rotary component (120) has 2n-pole sliders (120a,120b) circumferentially disposed at equal intervals with circumferential angle $2\pi/2n$, these sliders are connected by at least one rectifier (134), rotating with the rotor (110), so as to be conductive alternately as in the order (+), (-), (+), (-), and two brushes (132,132b) are provided, one of which is in contact with a (+) slider while the other is in contact with a (-) slider, one brush being directly connected to the AC power supply and the other being connected to the AC power supply via the stator coil (116).

4. A synchronous motor according to any one of claims 1, 2 and 3, wherein the commutator rotary member is urged by a spring (84) axially towards the position in which it engages said fixed elements (28,30,32) and a centrifugal weight mechanism (88-92) is arranged so that when a certain rotor speed has been reached, centrifugal movement of the weight (92) moves the commutator rotary member (22) axially against the spring (84) and out of engagement with said fixed elements.

5. A synchronous motor according to any one of the preceding claims arranged for 3-phase supply operation, and having three stator members each with its own set of commutator contacting elements and arranged with $120°$ phase difference in accordance with the phases of the AC power
supply.

# FIG.1

FIG.2A

FIG.2B

FIG.2C

# FIG.3A

# FIG.3B

# FIG.3C

# FIG.4

# FIG.5

# FIG.6

# FIG.7

# FIG.8A

# FIG.8B

# FIG.8C

0049986

FIG.9

126 124

132 120

142

112

130

128

122

FIG.10

133b 133a

120 142 114

132b 132a

FIG.11

120

**European Patent Office**

**EUROPEAN SEARCH REPORT**

Application number

EP 81 30 4599

## DOCUMENTS CONSIDERED TO BE RELEVANT

| Category | Citation of document with indication, where appropriate, of relevant passages | Relevant to claim |
|---|---|---|
| | US - A - 3 014 142 (LEE)<br>* Column 1, lines 30-72; columns 2,3; column 4, lines 1-68; figures 1-5 * | 1,4,5 |
| | -- | |
| | FR - A - 383 328 (WESTINGHOUSE)<br>* Page 2, lines 26-104; page 3, lines 1-56; figures 1,2 * | 4 |
| | -- | |
| | US - A - 1 631 102 (LEAKE)<br>* Page 1, lines 40-110; page 2, lines 1-38; figures 1,7 * | 4 |
| | -- | |
| | DE - B - 1 082 972 (STANDARD ELEKTRIK LORENZ)<br>* Column 2, lines 47-54; column 3, figures 1-5 * | 5 |
| | -- | |
| AD | US - A - 3 394 296 (DOTTO)<br>* Figures 1-5 * | 1 |
| | ---- | |

### CLASSIFICATION OF THE APPLICATION (Int. Cl.³)

H 02 K   7/118
         11/00

### TECHNICAL FIELDS SEARCHED (Int. Cl.³)

H 02 K   7/118
         11/00
         19/36
         25/00
H 02 P   1/46

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-01-1982 | TIO |

EPO Form 1503.1   06.78